# FASCICULE DE BREVET EUROPEEN

(11) **EP 3 704 445 B1**
(45) Date de publication et mention de la délivrance du brevet: **15.09.2021**
(21) Numéro de dépôt: 18799698.8
(22) Date de dépôt: 02.11.2018
(51) Int. Cl.: G01D 21/00, H02H 1/04

(54) **DISPOSITIF ET PROCÉDÉ DE PROTECTION CONTRE LA FOUDRE AMÉLIORÉ POUR UNE ENTRÉE DIFFERENTIELLE**
VORRICHTUNG UND VERBESSERTES VERFAHREN ZUM SCHUTZ GEGEN BLITZSCHLAG FÜR EINEN DIFFERENTIELLEN EINGANG
DEVICE AND IMPROVED METHOD FOR PROTECTING AGAINST LIGHTNING FOR A DIFFERENTIAL INPUT

(30) Priorité: 03.11.2017 FR 1760358
(43) Date de publication de la demande: 09.09.2020
(73) Titulaire: Safran Electronics & Defense, 75015 Paris (FR)
(72) Inventeur: MELINE, Olivier, 77550 Moissy-Cramayel (FR); LE-MEUNIER, Mathieu, 77550 Moissy-Cramayel (FR)
(74) Mandataire: Lavialle, Bruno François Stéphane
(86) Numéro de dépôt international: PCT/EP2018/080048
(87) Numéro de publication internationale: WO 2019/086625

(56) Documents cités:
- CN-U- 203 759 090
- www.analog.com/inamps: "A Designer's Guide to Instrumentation Amplifiers 3 RD Edition", , 31 décembre 2006 (2006-12-31), XP055173156, Extrait de l'Internet: URL:http://www.analog.com/media/en/trainin g-seminars/design-handbooks/58127566743127 78737Complete_In_Amp.pdf [extrait le 2015-03-03] cité dans la demande

## Description

La présente invention concerne le domaine des capteurs de mesure et plus précisément l'acquisition de signaux en provenance d'un capteur. Le capteur est par exemple un capteur de déplacement tel qu'un capteur passif de type LVDT (de l'anglais « Linear Variable Differential Transformer »).

### ETAT DE LA TECHNIQUE

Un dispositif d'acquisition de signaux d'un capteur, comprend généralement :
- un amplificateur différentiel standard ayant une première entrée reliée à une première ligne et une deuxième entrée reliée à une deuxième ligne, la première ligne et la deuxième ligne étant destinées à être reliées chacune à une sortie du capteur,
- un circuit de filtrage mode commun et mode différentiel relié à la première ligne et à la deuxième ligne,
- deux résistances de polarisation du capteur reliées respectivement à la première ligne et à la deuxième ligne.

Les signaux fournis par les capteurs ont généralement une tension de quelques millivolts à quelques volts et l'amplificateur différentiel utilisé est un amplificateur standard adapté à traiter des signaux correspondant à ces tensions. Pour les applications dans lesquelles le capteur risque d'être frappé par la foudre, il existe actuellement deux solutions pour limiter le risque que la foudre n'entraîne une défaillance du dispositif d'acquisition.

La première solution consiste à dimensionner les composants du circuit de filtrage pour qu'ils supportent l'onde de foudre, la filtrent et limitent la tension et le courant en entrée de l'amplificateur à des niveaux que ce dernier puissent supporter, à savoir quelques volts ou dizaines de volts et quelques milliampères. Le circuit de filtrage comprend alors des impédances de plusieurs dizaines de kilohms pour réduire le courant en entrée de l'amplificateur. Du fait de ces impédances élevées, les capacités parasites de câblage et des composants du circuit ne sont plus négligeables et toute dissymétrie dans les valeurs de ces capacités parasites entre les deux lignes entraînent une dégradation importante des caractéristiques de rejection des perturbations de mode commun du montage. Par ailleurs les fréquences de coupure de filtrage nécessaires à l'atténuation des ondes de foudre est souvent difficile à accorder avec les besoins opérationnels. De plus, les composants du circuit de filtrage sont dimensionnés pour les hautes tensions, ce qui en augmente notablement le coût et la surface.

La deuxième solution consiste à relier à chacune des lignes, en amont des résistances de polarisation, des composants écrêteurs de tension capables de maintenir la tension en entrée du circuit de filtrage à une tension maximale de l'ordre de quelques volts à quelques dizaines de volts. Les composants écrêteurs sont par exemple des diodes de suppression de tensions transitoires de type Transil qui absorbent le courant excédentaire pour abaisser la tension. Les composants utilisés pour le circuit de filtrage sont alors des composants standards peu coûteux et perturbant relativement peu l'acquisition. En revanche, les composants écrêteurs, du fait de leurs courants de fuite et de leurs capacités parasites dégradent la précision de l'acquisition, perturbent les détections de pannes, dégradent le taux de réjection de mode commun si des impédances sont formées en amont, dégradent l'impédance d'entrée (du fait des courants de fuite dans le cas du courant continu et de capacités parasites dans le cas du courant alternatif). Enfin, les capacités parasites de ces composants écrêteurs peuvent induire des résonances en général inacceptables dans le circuit de mesure si le capteur présente une impédance inductive.

La deuxième solution est connue notamment du document « A Designer's Guide to Instrumentation Amplifiers », Charles Kitchin et Lew Counts, 3rd Edition, Analog Devices, www.analog.com/inamps, qui comporte un chapitre concernant la protection des circuits d'acquisition comprenant un amplificateur différentiel.

CN203759090Udécrit un dispositif connu d'acquisition de signaux d'un capteur de courant.

### OBJET DE L'INVENTION

Un but de l'invention est de fournir un moyen pour protéger les dispositifs d'acquisition de mesure contre la foudre sans dégrader leurs performances.

### BREF EXPOSE DE L'INVENTION

A cet effet, on prévoit, selon l'invention, un dispositif d'acquisition de signaux d'un capteur, comprenant :
- un amplificateur différentiel ayant une première entrée reliée à une première ligne et une deuxième entrée reliée à une deuxième ligne, la première ligne et la deuxième ligne étant destinées à être reliées chacune à une sortie du capteur,
- deux résistances de polarisation du dispositif de mesure reliées respectivement à la première ligne et à la deuxième ligne,
- un circuit de filtrage mode commun et mode différentiel relié à la première ligne et à la deuxième ligne,
- deux composants écrêteurs de foudre reliés respectivement à la première ligne et à la deuxième ligne.

L'amplificateur différentiel est de type dit « High Common Mode Range » acceptant des tensions en entrée de plusieurs centaines de volts, généralement comprise entre environ 100 volts et 500 volts selon les fabricants et modèles. Un tel amplificateur opérationnel est choisi de telle manière que les composants écrêteurs soient dimensionnés pour écrêter la tension de foudre à cette valeur maximale. Le circuit de filtrage et les résistances de polarisation sont dimensionnés pour supporter la valeur maximale de tension écrêtée. Alors qu'un amplificateur différentiel de type classique aurait pû être choisi compte tenu des tensions à mesurer et des tensions en entrée du circuit, on choisit selon l'invention un amplificateur de type « High Common Mode Range » pour limiter l'écrêtage nécessaire en cas de foudroiement. En effet, en détournant l'amplificateur de type « High Common Mode Range » de son usage traditionnel, on crée un circuit d'acquisition, soumis au risque de foudre, autorisant en entrée de l'amplificateur une tension maximale de l'ordre d'une centaine de volts, ce qui permet de diminuer les énergies dissipées pendant l'écrêtage, et donc de diminuer la puissance de l'écrêtage. Ceci influe aussi, indirectement, favorablement sur les valeurs des éléments parasites des écrêteurs. En effet, les courants de fuite et la capacité parasite des composants écrêteurs sont proportionnels à la puissance des composants écrêteurs et inversement proportionnels à la tension d'écrêtage des composants écrêteurs. L'augmentation de leur tension d'écrêtage et la réduction de leur puissance permet de ramener ces courants et capacités parasites a des valeurs faibles qui ne dégradent plus les performances du montage. Les impédances et caractéristiques de filtrage mode commun et mode différentiel ne sont pas impactés par la présence des composants écrêteurs.

L'invention concerne également un procédé de protection contre la foudre d'un dispositif d'acquisition de signaux d'un capteur, le dispositif comprenant une première ligne et une deuxième ligne destinées à être reliées chacune à une sortie du capteur, deux résistances de polarisation du dispositif de mesure et deux composants écrêteurs de foudre étant reliés respectivement à la première ligne et à la deuxième ligne, et un circuit de filtrage mode commun et mode différentiel étant relié à la première ligne et à la deuxième ligne. Le procédé comprend les étapes de :
- utiliser, aux lieu et place d'un amplificateur différentiel classique, un amplificateur différentiel de type « High Common Mode Range » en reliant une première entrée de l'amplificateur différentiel à la première ligne et une deuxième entrée à la deuxième ligne,
- dimensionner les composants écrêteurs pour ramener une tension de foudre à une valeur maximale de tension de l'ordre de cent à trois cents volts, et le circuit de filtrage et les résistances de polarisation pour supporter la valeur maximale de tension.

D'autres caractéristiques et avantages de l'invention ressortiront à la lecture de la description qui suit de modes de réalisation particuliers non limitatifs de l'invention.

### BREVE DESCRIPTION DES FIGURES

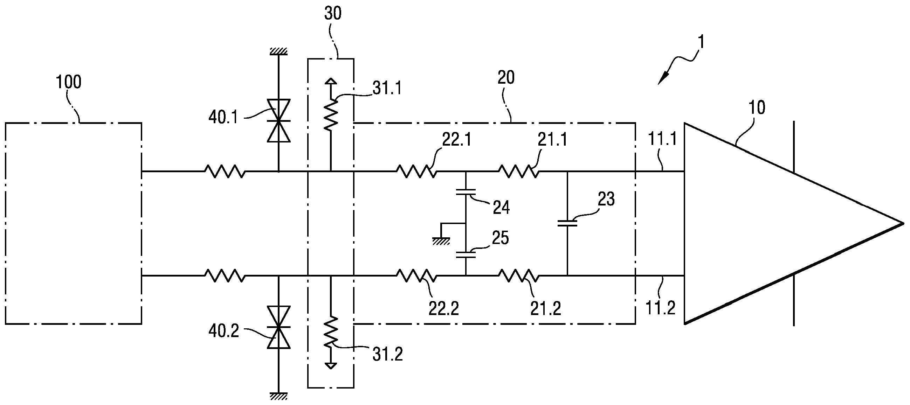

Il sera fait référence à la figure unique annexée représentant schématiquement le dispositif d'acquisition selon l'invention.

### DESCRIPTION DETAILLEE DE L'INVENTION

En référence à la figure, le dispositif 1 d'acquisition de signaux d'un capteur 100, comprenant un amplificateur différentiel 10, un circuit de filtrage 20, un circuit de polarisation 30, et un circuit de protection 40.

L'amplificateur différentiel 10 a une première entrée reliée à une première ligne 11.1 et une deuxième entrée reliée à une deuxième ligne 11.2. La première ligne 11.1 relie une première sortie du capteur 100 à la première entrée de l'amplificateur 10 et la deuxième ligne relie une deuxième sortie du capteur 100 à la deuxième entrée de l'amplificateur 10.

L'amplificateur 10 est de type « High Common Mode Range ».

Le circuit de filtrage 20 est agencé pour assurer un filtrage en mode commun et mode différentiel pour réduire les perturbations de haute fréquence sans dégrader la précision des mesures dans la bande utile. Le circuit de filtrage 20 comprend :
- sur chacune de la première ligne 11.1 et la deuxième ligne 11.2, une première résistance 21.1, 21.2 reliée d'une part à l'amplificateur 10 et d'autre part à une deuxième résistance 22.1, 22.2 reliée à une entrée du dispositif d'acquisition 1,
- un premier condensateur 23 reliant la première ligne 11.1 à la deuxième ligne 11.2 entre la première résistance 21.1, 21.2 et l'amplificateur 10,
- un deuxième condensateur 24 ayant une première borne reliée à la première ligne 11.1 entre la première résistance 21.1 et la deuxième résistance 22.1 et une deuxième borne reliée à une première borne d'un troisième condensateur 25 ayant une deuxième borne reliée à la deuxième ligne 11.2 entre la première résistance 21.2 et la deuxième résistance 22.2.

La deuxième borne du deuxième condensateur 24 et la première borne du troisième condensateur 25 étant reliées ensemble à la masse.

L'organe de polarisation 30 comprend une résistance de polarisation 31.1 reliant la première ligne 11.1 à la masse en amont de la deuxième résistance 22.1 et une résistance de polarisation 31.1 reliant la deuxième ligne à la masse en amont de la deuxième résistance 22.2.

Le circuit de protection 40 comprend :
- un composant 40.1 écrêteur de foudre reliant la première ligne 11.1 à la masse entre l'organe de polarisation 30 et le capteur 100 ;
- un composant 40.2 écrêteur de foudre reliant la deuxième ligne 11.2 à la masse entre l'organe de polarisation 30 et le capteur 100.

Les composants 40.1, 40.2 sont par exemple des diodes de suppression de tensions transitoires de type Transil qui absorbent le courant excédentaire pour abaisser la tension. Les composants 40.1, 40.2 sont dimensionnés pour écrêter la tension de foudre à une valeur juste nécessaire au respect des tensions maximales supportées par l'amplificateur « high common mode range » et les composants de filtrage et de polarisation du montage, soit selon les composants utilisés de l'ordre de cent à trois cents volts. Des tensions d'écrêtage plus faibles ne permettraient pas de bénéficier de la réduction de la valeur des courants et capacité parasites induites sur les composants écrêteurs. Des tensions d'écrêtages plus élevées nécessiteraient de sur-dimensionner les composants de filtrage sans pour autant bénéficier de réduction supplémentaires significatives de ces éléments parasites.

L'invention concerne ainsi également un procédé de protection contre la foudre d'un dispositif d'acquisition de signaux d'un capteur, le dispositif comprenant une première ligne et une deuxième ligne destinées à être reliées chacune à une sortie du capteur, deux résistances de polarisation du dispositif de mesure et deux composants écrêteurs de foudre étant reliés respectivement à la première ligne et à la deuxième ligne, et un circuit de filtrage mode commun et mode différentiel étant relié à la première ligne et à la deuxième ligne. Le procédé comprend les étapes de :
- utiliser, aux lieu et place d'un amplificateur différentiel classique, un amplificateur différentiel de type « High Common Mode Range » en reliant une première entrée de l'amplificateur différentiel à la première ligne et une deuxième entrée à la deuxième ligne,
- dimensionner les composants écrêteurs pour ramener une tension de foudre à une valeur maximale de tension de l'ordre de cent à trois cents volts, et le circuit de filtrage et les résistances de polarisation pour supporter la valeur maximale de tension.

Bien entendu, l'invention n'est pas limitée aux modes de réalisation décrits mais englobe toute variante entrant dans le champ de l'invention telle que définie par les revendications.

En particulier, le dispositif peut présenter des différences par rapport à celui décrit, par exemple au niveau du nombre de composants, tant qu'il répond à la définition donnée dans les revendications.

Il est possible de choisir les composants pour avoir n'importe quelle tension maximale après écrêtage entre environ 100 volts environ et 300 volts environ. La tension maximale peut être comprise entre 150 volts et 200 volts, voire être égale à 200 volts environ.

## Revendications

1. Dispositif (1) d'acquisition de signaux d'un capteur (100), comprenant :
- un amplificateur différentiel (10) ayant une première entrée reliée à une première ligne (11.1) et une deuxième entrée reliée à une deuxième ligne (11.2), la première ligne et la deuxième ligne étant destinées à être reliées chacune à une sortie du capteur,
- deux résistances de polarisation (31.1, 31.2) du dispositif de mesure reliées respectivement à la première ligne et à la deuxième ligne,
- un circuit de filtrage (20) mode commun et mode différentiel relié à la première ligne et à la deuxième ligne,
- deux composants écrêteurs de foudre (40.1, 40.2) reliés respectivement à la première ligne et à la deuxième ligne,
**caractérisé en ce que** l'amplificateur différentiel (10) est de type « High Common Mode Range », **en ce que** les composants écrêteurs (40.1, 40.2) sont dimensionnés pour ramener une tension de foudre à une valeur maximale de tension de l'ordre de cent à trois cents volts, et **en ce que** le circuit de filtrage (20) et les résistances de polarisation (31.1, 31.2) sont dimensionnées pour supporter la valeur maximale de tension.

2. Dispositif selon la revendication 1, dans lequel le circuit de filtrage (20) comprend :
- sur chacune de la première ligne et la deuxième ligne, une première résistance reliée d'une part à l'amplificateur et d'autre part à une deuxième résistance reliée à une entrée du dispositif d'acquisition,
- un premier condensateur reliant la première ligne à la deuxième ligne entre la première résistance et l'amplificateur,
- un deuxième condensateur ayant une première borne reliée à la première ligne entre la première résistance et la deuxième résistance et une deuxième borne reliée à une première borne d'un troisième condensateur ayant une deuxième borne reliée à la deuxième ligne entre la première résistance et la deuxième résistance, la deuxième borne du deuxième condensateur et la première borne du troisième condensateur étant reliée à la masse.

3. Dispositif selon la revendication 1 ou la revendication 2, dans lequel la tension maximale est comprise entre 150 volts environ et 200 volts environ.

4. Dispositif selon la revendication 3, dans lequel la tension maximale est de 200 volts environ.

5. Procédé de protection contre la foudre d'un dispositif (1) d'acquisition de signaux d'un capteur, le dispositif comprenant une première ligne (11.1) et une deuxième ligne (11.2) destinées à être reliées chacune à une sortie du capteur, deux résistances de polarisation (31.1, 31.2) du dispositif 20 de mesure et deux composants écrêteurs de foudre (40.1, 40.2) étant reliés respectivement à la première ligne et à la deuxième ligne, et un circuit de filtrage (20) mode commun et mode différentiel étant relié à la première ligne et à la deuxième ligne, **caractérisé en ce que** le procédé comprend les étapes de :
- utiliser un amplificateur différentiel (10) de type « High Common Mode Range » en reliant une première entrée de l'amplificateur différentiel à la première ligne et une deuxième entrée à la deuxième ligne,
- dimensionner les composants écrêteurs (40.1, 40.2) pour ramener une tension de foudre à une valeur maximale de tension de l'ordre de cent à trois cents volts, et le circuit de filtrage (20) et les résistances de polarisation (31.1, 31.2) pour supporter la valeur maximale de tension.

6. Procédé selon la revendication 5, dans lequel la tension maximale est comprise entre 150 volts environ et 200 volts environ.

7. Procédé selon la revendication 6, dans lequel la tension maximale est de 200 volts environ.

## Patentansprüche

1. Vorrichtung (1) zur Erfassung von Signalen eines Sensors (100), umfassend:
- einen Differentialverstärker (10), der einen ersten Eingang hat, der mit einer ersten Leitung (11.1) verbunden ist, und einen zweiten Eingang, der mit einer zweiten Leitung (11.2) verbunden ist, wobei die erste Leitung und die zweite Leitung dazu bestimmt sind, jeweils mit einem Ausgang des Sensors verbunden zu werden,
- zwei Vorspannungswiderstände (31.1., 31.2) zum Vorspannen der Messvorrichtung, die mit der ersten Leitung bzw. mit der zweiten Leitung verbunden sind,
- eine Gleichtakt- und Gegentakt-Filterschaltung (20), die mit der ersten Leitung und mit der zweiten Leitung verbunden ist,
- zwei Blitzbegrenzerkomponenten (40.1, 40.2), die mit der ersten Leitung bzw. mit der zweiten Leitung verbunden sind,
**dadurch gekennzeichnet, dass** der Differentialverstärker (10) vom Typ "High Common Mode Range" ist, dass die Begrenzerkomponenten (40.1, 40.2) so bemessen sind, dass sie eine Blitzspannung auf einen maximalen Spannungswert in der Größenordnung von 100 bis 300 Volt reduzieren, und dass die Filterschaltung (20) und die Vorspannungswiderstände (31.1, 31.2) so bemessen sind, da sie dem maximalen Spannungswert standhalten.

2. Vorrichtung nach Anspruch 1, bei der die Filterschaltung (20) umfasst:
auf der ersten und auf der zweiten Leitung jeweils einen ersten Widerstand, der einerseits mit dem Verstärker und andererseits mit einem zweiten Widerstand verbunden ist, der mit einem Eingang der Erfassungsvorrichtung verbunden ist,
- einen ersten Kondensator, der die erste Leitung mit der zweiten Leitung zwischen dem ersten Widerstand und dem Verstärker verbindet,
- einen zweiten Kondensator, der einen ersten Anschluss hat, der mit der ersten Leitung zwischen dem ersten Widerstand und dem zweiten Widerstand verbunden ist, sowie einen zweiten Anschluss, der mit einem ersten Anschluss eines dritten Kondensators verbunden ist, der einen zweiten Anschluss hat, der mit der zweiten Leitung zwischen dem ersten Widerstand und dem zweiten Widerstand verbunden ist, wobei der zweite Anschluss des zweiten Kondensators und der erste Anschluss des dritten Kondensators mit Masse verbunden sind.

3. Vorrichtung nach Anspruch 1 oder Anspruch 2, bei der die maximale Spannung zwischen ungefähr 150 Volt und ungefähr 200 Volt liegt.

4. Vorrichtung nach Anspruch 3, bei der die maximale Spannung ungefähr 200 Volt beträgt.

5. Verfahren zum Schutz vor Blitz für eine Erfassungsvorrichtung (1) zur Erfassung von Signalen eines Sensors, wobei die Vorrichtung eine erste Leitung (11.1) und eine zweite Leitung (11.2) umfasst, die dazu bestimmt sind, jeweils mit einem Ausgang des Sensors verbunden zu werden, wobei zwei Vorspannungswiderstände (31.1, 31.2) der Messvorrichtung und zwei Blitzbegrenzerkomponenten (40.1, 40.2) mit der ersten Leitung bzw. der zweiten Leitung verbunden sind, und eine Gleichtakt- und Gegentakt-Filterschaltung (20) mit der ersten Leitung und der zweiten Leitung verbunden ist, **dadurch gekennzeichnet, dass** das Verfahren die Schritte umfasst:
- Verwenden eines Differentialverstärkers (10) vom Typ "High Common Mode Range", indem ein erster Eingang des Differentialverstärkers mit der ersten Leitung und ein zweiter Eingang mit der zweiten Leitung verbunden wird,
- Bemessen der Begrenzerkomponenten (40.1, 40.2) derart, dass eine Blitzspannung auf einen maximalen Spannungswert in der Größenordnung von 100 bis 300 Volt reduziert wird, und Bemessen der Filterschaltung (20) und der Vorspannungswiderstände (31.1, 31.2) derart, dass sie dem maximalen Spannungswert standhalten.

6. Verfahren nach Anspruch 5, bei dem die maximale Spannung zwischen ungefähr 150 Volt und ungefähr 200 Volt beträgt.

7. Verfahren nach Anspruch 6, bei dem die maximale Spannung ungefähr 200 Volt beträgt.

## Claims

1. A device for acquiring signals from a sensor (100), comprising:
· a differential amplifier (10) having a first input connected to a first line (11.1) and a second input connected to a second line(11.2), the first line and the second line each being for connection to a respective output of the sensor;
· two bias resistors (31.1, 31.2) for biasing the measurement device and connected respectively to the first line and to the second line;
· a common mode and differential mode filter circuit (20) connected to the first line and to the second line; and
· two lightning limiter components (40.1, 40.2) connected respectively to the first line and to the second line;
the device being **characterized in that** the differential amplifier is of the "high common mode range" type, **in that** the limiter components (40.1, 40.2) are dimensioned to reduce a lightning voltage to a maximum voltage value of about one hundred to three hundred volts, and **in that** the filter circuit (20) and the bias resistors (31.1, 31.2) are dimensioned to withstand the maximum voltage value.

2. A device according to claim 1, wherein the filter circuit (20) comprises:
· on each of the first line and the second line, a first resistor connected firstly to the amplifier and secondly a second resistor that is connected to a respective input of the acquisition device;
· a first capacitor connecting the first line to the second line between the first resistor and the amplifier; and
· a second capacitor having a first terminal connected to the first line between the first resistor and the second resistor and a second terminal connected to a first terminal of a third capacitor having a second terminal connected to the second line between the first resistor and the second resistor, the second terminal of the second capacitor and the first terminal of the third capacitor being connected to ground.

3. A device according to claim 1 or claim 2, wherein the maximum voltage lies in the range approximately 150 volts to approximately 200 volts.

4. A device according to claim 3, wherein the maximum voltage is approximately 200 volts.

5. A method of providing lightning protection for a device (1) for acquiring signals from a sensor, the device comprising a first line (11.1) and a second line (11.2), each for connection to a respective output of the sensor, two bias resistors (31.1, 31.2) for biasing the measurement device and two lightning limiter components (40.1, 40.2) connected respectively to the first line and to the second line, and a common mode and differential mode filter circuit (20) connected to the first line and to the second line, **characterized in that** the method comprises the steps of:
· using a differential amplifier (10) of "high common mode range" type, connecting a first input of the differential amplifier to the first line and a second input to the second line; and
· dimensioning the limiter components (40.1, 40.2) to reduce a lightning voltage to a maximum voltage value of about one hundred to three hundred volts, and dimensioning the filter circuit (20) and the bias resistors (31.1, 31.2) to withstand that maximum voltage value.

6. A device according to claim 5, wherein the maximum voltage lies in the range approximately 150 volts to approximately 200 volts.

7. A device according to claim 6, wherein the maximum voltage is approximately 200 volts.
